# EUROPÄISCHE PATENTSCHRIFT

(11) **EP 3 053 895 B1**
(45) Veröffentlichungstag und Bekanntmachung des Hinweises auf die Patenterteilung: **15.04.2020**
(21) Anmeldenummer: 15153632.3
(22) Anmeldetag: 03.02.2015
(51) Int. Cl.: C04B 28/06

(54) **ZUBEREITUNGSMASSEN FÜR KAPILLARLEITFÄHIGE, PORÖSE SUBSTRATE UND KAPILLARLEITFÄHIGE, PORÖSE SUBSTRATE, ERHALTEN AUS DIESEN ZUBEREITUNGSMASSEN**
PREPARATION MASSES FOR POROUS SUBSTRATES CAPABLE OF CAPILLARY CONDUCTION AND POROUS SUBSTRATES CAPABLE OF CAPILLARY CONDUCTION OBTAINED FROM SAID PREPARATION MASSES
MASSES DE PREPARATION POUR SUBSTRATS POREUX CONDUCTEURS PAR CAPILLARITE ET SUBSTRATS POREUX CONDUCTEURS PAR CAPILLARITE OBTENUS A PARTIR DESDITES MASSES DE PREPARATION

(43) Veröffentlichungstag der Anmeldung: 10.08.2016
(73) Patentinhaber: DAW SE, 64372 Ober-Ramstadt (DE)
(72) Erfinder: HENNICKE, Thomas, 99834 Gerstungen (DE); LOHMANN, Thomas, 68526 Ladenburg (DE); BETHMANN, Björn, 06333 Wiederstedt (DE)
(74) Vertreter: Metten, Karl-Heinz

(56) Entgegenhaltungen:
- EP-A2- 0 271 329
- WO-A1-01/28956
- FR-A1- 2 984 302

## Beschreibung

Die vorliegende Erfindung betrifft Zubereitungsmassen für kapillarleitfähige, poröse Substrate, diese kapülarleitfähigen, porösen Substrate, ein Verfahren zur Herstellung dieser kapillarleitfähigen, porösen Substrate aus den Zubereitungsmassen sowie die Verwendung der kapillarleitfähigen, porösen Substrate.

Poröse oder geschäumte Werkstoffe werden auf Grund ihres hohen Luftanteils gerne für die Isolierung von Gebäuden eingesetzt. Hierbei wird genutzt, dass Luft über eine geringe Wärmeleitfähigkeit verfügt.

Bei innengedämmten Räumen ist dafür Sorge zu tragen, dass es an der Innenseite der isolierten Gebäudewand nicht zu Schimmelbildung oder anderweitigen Feuchteschäden kommt. Durch die Innendämmung findet eine Auskühlung der Gebäudeaußenwand statt, wodurch Feuchtigkeit leichter an deren Innenseite auskondensieren kann. Auch kann heftiger Schlagregen dazu führen, dass Feuchtigkeit von der Gebäudeaußenseite bis zur Innenseite vordringt.

Um einen Feuchtetransport durch eine Wärmedämmschicht aus geschäumten Materialien zu bewerkstelligen, wird in der WO 2009/026 910 A1 vorgeschlagen, in einem regelmäßigen Muster eine geschäumte Dämmschicht mit zylinderförmigen Durchbrüchen zu versehen, welche mit einem kapillarleitfähigen Material befüllt sind, das sich ununterbrochen von der der Gebäudewand zugewandten Seite bis zu der dem Innenraum zugewandten Seite der Dämmschicht erstreckt. Der Verfahrens- und apparatetechnische Aufwand für die Herstellung solcher mit kapillarleitfähigen Durchbrüchen versehenen geschäumten Dämmplatten ist relativ hoch. Derartige kapillarleitfähig ausgestattete Dämmschichtplatten sind gemäß der WO 2009/026 910 A1 beidseitig vollflächig mit einer kapillarleitfahigen Putz- bzw. Mörtelschicht auszustatten, damit gebäudewandseitig die dort anfallende Feuchtigkeit aufgenommen und die durch die Durchbrüche hindurch transportierte Feuchtigkeit mit hinreichender Geschwindigkeit innenraumseitig mittels Kapillarleitung wieder abgegeben werden kann.

Ein Wärmedämmmodul, das dem in der WO 2009/026 910 A1 beschriebenen entspricht und das ebenfalls mit Durchbrüchen versehen ist, welche kapillarleitfähiges Material enthalten, beschreibt die DE 10 2011 050 830 A1. Hier wird innenraumseitig die Anbringung einer offenporigen Lehm-, Kalk-, Kalkzement- bzw. Zementputzschicht vorgeschlagen.

Der Einsatz geschäumter Innendämmungen verbietet sich regelmäßig bei vielen denkmalgeschützten Gebäuden, beispielsweise bei Fachwerkbauten. Für solche Anwendungsfälle schlägt die DE 20 2005 005 231 U1 den Einsatz einer Schichtstruktur umfassend einen kapillarleitfähigen Wärmedämmlehm vor, der unmittelbar auf der Innenseite der Fachwerksaußenwand anzubringen und mit einer sich innenseitig anschließenden Tafel oder Platte aus kapillarleitfähigem Material kapillarleitend zu verbinden ist. Hierbei wird der Ton des kapillarleitfahigen Wärmedämmlehms nicht mit Quarzsand abgemagert, sondern mit Kieselgur oder ähnlich offenporigen Materialien.

Der Feuchtetransport bei einer Innendämmung gelingt gemäß der DE 10 2007 025 303 A1 mit einer Platte aus expandiertem Kork, wobei in die Hohlräume und Löcher dieser Dämmplatte kapillarleitfähiger Lehm eingebracht worden ist.

Eine Dämmsystem vergleichbar mit dem der expandierten Korkplatten der DE 10 2007 025 303 A1 wird in der EP 2 447 431 A2 thematisiert. In ein offenporiges Kunststoffschaummaterial ist eine Schlämme einzubringen, die nach dem Aushärten kapillarleitfähige Kanäle liefert. Für die Schlämme kommt eine solche auf Kalk- oder Zementbasis zum Einsatz. Diese kann auch granuläres Aerogel oder pyrogene Kieselsäure enthalten.

Der Feuchtetransport bei einer Innendämmung soll gemäß der DE 10 2011 113 287 A1 mit einem Wärmedämmmodul gelingen, das aus einer ersten und einer zweiten Calciumsilikatschicht sowie einer zwischen diesen beiden Schichten positionierten Wärmedämmung, die in einer Rahmenanordnung aus Calciumsilikat vorliegt, gebildet ist. Über diese Rahmenanordnung wird der Feuchtetransport von der der Gebäudeaußenwand zugewandten Calciumsilikatschicht zu der dem Innenraum zugewandten Calciumsilikatschicht bewerkstelligt.

Ein ähnliches kapillarleitfahiges Dämmmodulsystem findet sich in der DE 10 2010 044 789 A1 beschrieben. Mit kapillarleitfähigem Calciumsilikat ummantelte Dämmplatten erlauben auf Grund der Anwesenheit von Calciumsilikatstegen einen Feuchtetransport von der einen Seite des Wärmedämmmoduls zu der gegenüberliegenden Seite.

Zur Feuchteregulierung von wärmegedämmten Innenräumen schlägt die DE 101 46 174 A1 eine kapillarleitfähige Beschichtung aus Calciumsilikat in Form von Xonotlit oder Tobermorit auf einer geschäumten Kunststoffplatte aus zum Beispiel Polystyrolschaum oder aus PUR-Hartschaum vor. Der Feuchtetransport durch die Dämmplatte hindurch ist nicht Gegenstand dieser Druckschrift. Vielmehr wird darin explizit auf die Eigenschaft solcher Dämmschichten als Dampfsperren hingewiesen.

Calciumsilikat bzw. Calciumsilikathydrat werden heutzutage regelmäßig durch eine Autoklavenbehandlung gewonnen. Typischerweise werden hierbei Drücke im Bereich von 16 bar und Temperaturen im Bereich von 200°C in einer Wasserdampfatmosphäre eingesetzt. Dieses Verfahren ist apparativ aufwendig und kostenintensiv. Das mittels Autoklavieren erhältliche Calciumsilikat fällt dabei regelmäßig als Xonotlit an.

In der FR 2 984 302 A1 wird eine stabilisierte wässrige Suspension beschrieben aus einem hydraulischen Bindemittel, enthaltend Aluminium- und/oder Calciumsulfoaluminiumzement, und, bezogen auf die Gesamtmasse des Aluminium- und/oder Calciumsulfaiuminiumzements, 0,1 bis 20 Gew.-% an einer phosphorhaltigen Verbindung, ausgewählt aus der Gruppe bestehend aus Metaphosphorsäure, Phosphorsäure, Phosphinsäure, Phosphonsäure und Verbindungen, die eine dieser phosphorhaltigen Verbindungen durch Reaktion mit Wasser bilden können. Diese wässrige Suspension soll über eine lange Haltbarkeit verfügen und dabei ihre flüssige Konsistenz behalten, in großen Mengen mit organischen Harzen vermischt werden können ohne abzubinden und eine geringe Toxizität und Ökotoxizität besitzen.

Aus der EP 2 71 329 A2 geht ein hydraulisches Bindemittel, enthaltend mindestens 70 % Ettringit und maximal 30% Calciumsilikathydrat, hervor, erhalten durch Vennischen von CaSO₄, CaO und Al₂O₃ sowie gegebenenfalls SiO₂, jeweils mit einer maximalen Partikelgröße von 150 µm, und Hydratisieren der Mischung in Gegenwart von 35 Gew.-% Wasser. Dieses hydraulische Bindemittel soll eine ökologische Alternative zu Portlandzement darstellen. Die WO 01/28956 A1 betrifft eine härtbare Zusammensetzung, umfassend (i) eine zementartige Zusammensetzung, enthaltend (a) mindestens 25% eines reaktiven Zements mit einem Verhältnis C zu A oder (A + X) von mehr als 1:1, wobei X S* oder S oder F ist, b) von 0 bis 10% an Kalk und (c) 5 bis 70 % Calciumsulfat, wobei die Summe von (b) und (c) mindestens 15 % beträgt, wobei die Anteile der Komponenten so bemessen sind, dass die Zusammensetzung beim Hydratisieren in der Lage ist, mindestens ihr Eigengewicht an Wasser zu absorbieren, und (ii) eine wässrige Emulsion eines organischen Polymers, wobei die Menge von (ii) in Bezug auf (i) so bemessen ist, dass ein Gewichtsverhältnis von Polymerfeststoffen zu dem kombinierten Gewicht von (a), (b)) und (c) im Bereich von 0,5:1 bis 10:1 liegt, oder (iii) ein organisches Polymer in Form eines in Wasser dispergierbaren Pulvers, wobei die Menge des organischen Polymers so bemessen ist, dass ein Gewichtsverhältnis von Polymerfeststoffen zu kombiniertem Gewicht von (a), (b) und (c) von 0,5:1 bis 10:1 gegeben ist und wobei die Anteile der Komponenten innerhalb der oben definierten Bereiche ausgewählt sind, um eine Zusammensetzung bereitzustellen, die bei Hydratation eine Zugfestigkeit bei 4 Stunden von mindestens 135 psi und eine Dehnung bei 7 Tagen von mindestens 20 % aufweist. Diese Zusammensetzungen sollen zu Beschichtungen mit einer ausreichenden Frühfestigkeit von typischerweise mindestens 135 psi führen, die zudem eine ausreichende langfristige Flexibilität aufweisen. Es soll demgemäß nicht mehr 24 Stunden dauern, bis eine ausreichende Frühfestigkeit erreicht ist, wodurch sich Ausfallzeiten bei Verwendung in Minen reduzieren lassen sollen.

Es wäre wünschenswert, auf kapillarleitfähige Materialien für die Innendämmung von Gebäuden zurückgreifen zu können, die kostengünstig und einfach herstellbar sowie leicht zu verarbeiten sind und die zudem dauerhaft einen wirksamen Feuchtetransport gewährleisten.

Demgemäß wurde eine Zubereitungsmasse für kapillarleitfähige, poröse Substrate gefunden, enthaltend oder im Wesentlichen bestehend aus
a) mindestens einem gemahlenen Klinker auf Calciumaluminatbasis, umfassend oder bestehend aus gemahlenem Calciumsulfoaluminatklinker und/oder gemahlenem Calciumaluminatklinker, beispielsweise gemahlenem Tonerdeschmelzklinker, insbesondere gemahlenem Calciumsulfoaluminatklinker,
b) mindestens einer Sulfat-Komponente, ausgewählt aus der Gruppe bestehend aus Anhydrit (CaSO₄), Calciumsulfat-Halbhydrat (CaSO₄ • ½ H₂O), Calciumsulfat-Dihydrat (CaSO₄ • 2H₂O), Magnesiumsulfat, Alkalisulfat, insbesondere Natriumsulfat, Eisensulfat, Natriumhydrogensulfat, Calciumhydrogensulfat, Mischsulfaten der genannten Sulfate, insbesondere Syngenit, Lecontit, Koktait, Eugsterit, Hydroglauberit, Wattevillit und Mirabilite sowie deren Mischungen, und belieben Mischungen, insbesondere Anhydrit,
c) mindestens einem, insbesondere mineralischen, Rheologieadditiv und
d) Wasser,
   wobei das Gewichtsverhältnis von Wasser (Komponente d)) zu der Summe aus gemahlenem Klinker auf Calciumaluminatbasis (Komponente a)) und Sulfat-Komponente (Komponente b)) größer oder gleich 1,0, bevorzugt größer oder gleich 2,0 und besonders bevorzugt im Bereich von 2,5 bis 5,0, ist.

Die erfindungsgemäße Zubereitungsmasse zeichnet sich durch die Verwendung einer Mischung aus einer mineralischen Bindemittelkomponente in Form eines gemahlenen Klinkers auf Calciumaluminatbasis und einer Sulfat-Komponente aus. Ferner ist wesentlich, dass die erfindungsgemäße Zubereitungsmasse über einen sehr hohen Wasseranteil verfügt. Ganz besonders bevorzugt liegt das Gewichtsverhältnis von Wasser (Komponente d)) zu der Summe aus gemahlenem Klinker auf Calciumaluminatbasis (Komponente a)) und Sulfat-Komponente (Komponente b)) im Bereich von 2,0 bis 4,0.

In einer ganz bevorzugten Ausfuhrungsform kommen neben dem gemahlenen Klinker auf Calciumaluminatbasis gemäß Komponente a) sowie der Sulfat-Komponente b) keine weiteren Bindemittel zum Einsatz, insbesondere keine organischen Bindemittel.

Mineralische Bindemittel auf Basis von gemahlenem Calciumaluminatklinker, d.h. gemäß Komponente a), wie gemahlener Calciumsulfoaluminatklinker und gemahlener Calciumaluminatklinker sind dem Fachmann bekannt und kommerziell erhältlich. Tonerdeschmelzklinker stellt z.B. eine mögliche Ausführungsform eines geeigneten Calciumaluminatklinkers dar. Das gleiche trifft auf die Sulfat-Komponente b) zu. Im Sinne der vorliegenden Erfindung stellen die Komponente a), die Komponente b) wie auch beliebige Mischungen der Komponenten a) und b) mineralische Bindemittel dar.

Klinker werden im Allgemeinen durch dem Fachmann bekannte Sinterungsprozesse erhalten und stellen im Sinne der vorliegenden Erfindung eine Vorstufe eines Zements dar. Im Sinne der Erfindung soll unter Zement ein Material verstanden werden, das man durch Mahlen des Klinkers erhält. Das geschilderte Verständnis des Begriffs Klinker ist dem Fachmann auf dem Gebiet der Zementherstellung geläufig.

Gemahlener Calciumaluminatklinker, z.B. gemahlener Tonerdeschmelzklinker, stellt demgemäß im Sinne der Erfindung Calciumaluminatzement dar. Dieser gemahlene Calciumaluminatklinker wird erhalten aus den Hauptausgangssubstanzen bzw. -rohstoffen Bauxit bzw. Aluminiumoxid, Kalkstein und gegebenenfalls Quarz. Diese Komponenten werden üblicherweise in einem geeigneten Ofen. z.B. einem Drehrohrofen- oder einem Lichtbogenofen, an- bzw. vollständig aufgeschmolzen, üblicherweise auf Temperaturen oberhalb von 1400°C. Wird das Material angeschmolzen, spricht man auch von einer Versinterung des Materials. Nach dem An- bzw. Aufschmelzen wird das Material abgekühlt. Nach dem Abkühlen wird üblicherweise ein Material erhalten, welches als Calciumaluminatklinker bezeichnet wird. Dieser Calciumaluminatklinker stellt, ebenso wie der Calciumsulfoaluminatklinker, eine Untergruppe zu den gemahlenen Klinkern auf Calciumaluminatbasis der Komponente a) dar. Durch Mahlen, gegebenenfalls kombiniert mit vorgeschaltetem Aufbrechen dieser Klinker gelangt man zu Calciumaluminatzementen. Der Calciumaluminatzement wird somit aus dem zugehörigen Klinker über einen Mahlvorgang erhalten. Gemahlener Calciumaluminatklinker im Sinne der Erfindung enthält je nach Wahl der Ausgangsrohstoffe und des Herstellungsverfahrens als Hauptphasen CaO•Al₂O₃ (Monocalciumaluminat; auch unter der Bauchemie-Notation CA bekannt), 3CaO•Al₂O₃ (Tricalciumaluminat; auch unter der Bauchemie-Notation C3A bekannt), CaO•2Al₂O₃ (auch unter der Bauchemie-Notation CA₂ bekannt) oder 12CaO•7Al₂O₃ (Mayenit; auch unter der Bauchemie-Notation C₁₂A₇ bekannt) oder beliebige Mischungen dieser Phasen. Bevorzugt liegen in dem gemahlenen Calciumaluminatklinker als Hauptphase(n) Monocalciumaluminat oder Monocalciumaluminat und CA₂ oder C₃A oder Mayenit sowie besonders bevorzugt alle vier vorangehend genannten Hauptphasen vor. Solche gemahlenen Calciumaluminatklinker sind besonders bevorzugt, in denen der Aluminatanteil, d.h. der Gehalt an Al₂O₃-Einheiten mindestens 25 Gew.-%, bevorzugt mindestens 30 Gew.-% und besonders bevorzugt mindestens 35 Gew.-%, jeweils bezogen auf das Gesamtgewicht des Calciumaluminatklinkers, beträgt. Als Nebenphasen können in den gemahlenen Calciumaluminatklinkern z.B. auch Eisenoxide und/oder Silikate vorliegen. Gemahlener Calciumsulfoaluminatklinker enthält als Hauptbestandteil bzw. Hauptphase Ye'elimit (bauchemische Abkürzung: C₄A₃Ŝ). Als weitere hydraulisch aktive Phasen können Dicalciumsilikat (C₂S) und Tetracalciumaluminatferrit (C₄AF) in gemahlenem Calciumsulfoaluminatklinker bzw. in Calciumsulfoaluminatzement enthalten sein. Calciumsulfoaluminatklinker wird großtechnisch üblicherweise erhalten durch Sinterung von Hauptausgangssubstanzen enthaltend Bauxit bzw. Aluminiumoxid, Kalkstein und Gips oder Halbhydrat oder Anhydrit oder eine beliebige Mischung aus Gips, Halbhydrat und/oder Anhydrit sowie gegebenenfalls aluminiumreichem Ton und/oder eine SiO₂-Quelle, jeweils in vorzugsweise homogenisierter, feinteiliger Form. Diese Komponenten werden üblicherweise in einem geeigneten Ofen an- bzw. vollständig aufgeschmolzen. Wird das Material angeschmolzen, spricht man auch von einer Versinterung des Materials. Nach dem An- bzw. Aufschmelzen wird das Material abgekühlt. Nach dem Abkühlen wird üblicherweise ein Material erhalten, welches als Calciumsulfoaluminatklinker bezeichnet wird. Durch Mahlen, gegebenenfalls kombiniert mit vorgeschaltetem Aufbrechen dieser Klinker gelangt man zu Calciumsulfoaluminatzementen. Gemahlener Calciumsulfoaluminatklinker weist einen signifikant unterschiedlichen Chemismus und Phasengehalt im Vergleich zu Portlandzement auf. Calciumsulfoaluminatzemente umfassen erfindungsgemäß keine Portlandzemente. Im Sinne der vorliegenden Erfindung umfassen Ssubstanzen für geeignete Klinker auf Calciumaluminatbasis auch Calciumsulfoaluminatklinker und Calciumaluminatklinker. Erfindungsgemäß umfasst die Komponente a), d.h. der gemahlene Klinker auf Calciumaluminatbasis wie gemahlener Calciumsulfoaluminatklinker bzw. gemahlener Calciumaluminatklinker dabei keine Mischung, die als separate, weitere Komponente schon eine Sulfat-Komponente (Komponente b)) wie Calciumsulfat bzw. Gips enthält. In diesem Fall liegen die Komponenten a) und b) bereits nebeneinander vor. Ein Calciumsulfoaluminatklinker ist kein Calciumaluminatklinker im Sinne der Erfindung.

Selbstverständlich können der Komponente a) weitere übliche Zusatzstoffe bzw. Additive (Komponenten f) und g)) wie Hüttensand, Flugasche, gebrannter Schiefer, Zementzusatzmittel mit hydratationsbeschleunigender, z.B. Calciumchlorid, und/oder hydratationsverzögernder Wirkung, z.B. Natriumborate, zugesetzt werden. In Bezug auf die genannten Zusatzstoffe bildet die Komponente a) in einer bevorzugten Ausgestaltung die Hauptkomponente, d.h. sie liegt bezogen auf das Gesamtgewicht an den genannten Zusatzstoffen und der Komponente a) mit einem Anteil größer 50 Gew.-% vor.

Demgemäß enthält oder besteht, insbesondere besteht, die Komponente a) vorzugsweise aus mindestens einem gemahlenen Calciumaluminatklinker und/oder mindestens einem gemahlenen Calciumsulfoaluminatklinker, besonders bevorzugt einem gemahlenen Calciumsulfoaluminatklinker. Für das Mahlen der genannten Klinker zu den entsprechenden Zementen stehen dem Fachmann geeignete Mahlverfahren zur Verfügung. Hierfür kann z.B. auf Kugelmühlen, Gutbett-Walzenmühlen oder Vertikalwälzmühlen zurückgegriffen werden.

Bei der Komponente b) kommen als geeignete Alkalisulfate insbesondere Lithium-, Natrium- und Kaliumsulfat in Betracht, wobei Natriumsulfat bevorzugt ist. Die Sulfat-Komponente wird insbesondere in mikronisierter Form zu der erfindungsgemäßen Zubereitungsmasse gegeben. Dieses gilt insbesondere auch für das als Sulfat-Komponente bevorzugte Anhydrit. Die Sulfat-Komponente kann dabei z.B. separat gemahlen und anschließend mit der erfindungsgemäßen Zusammensetzung oder einem Bestandteil hiervon, z.B. mit der Komponente a) vermengt werden. Gemäß einer weiteren Ausführungsform ist es auch möglich, die Sulfat-Komponente (Komponente b)) wie Calciumsulfat bzw. Gips und/oder Anhydrit gemeinsam mit den vorangehend beschriebenen Klinkern auf Calciumaluminatbasis wie Calciumsulfoaluminatklinkern und/oder Calciumaluminatklinkern, z.B. Tonerdeschmelzklinkern, zu vermahlen, um auf diese Weise zu einer vorteilhaften innigen Vermengung der Komponenten a) und b) zu gelangen. Durch das gemeinsame Vermahlen der Klinker gemäß Komponente a) mit der Komponente b) und/oder mit nicht zerkleinertem oder gemahlenem Ausgangsmaterial der Komponente b) kann man zu einem für nachfolgende Abbinde- und Erhärtungsprozesse optimierten Bindemittel gelangen.

Zur Einstellung der Rheologie der erfindungsgemäßen Zubereitungsmasse wird bevorzugt auf mineralische Rheologieadditive zurückgegriffen (Komponente c)). Unter diesen Rheologieadditiven werden bevorzugt Tonminerale eingesetzt. Geeignete Tonminerale umfassen z.B. Bentone, Attapulgit, Sepiolith, Kaolinit, Chrysotil, Illit, Vermiculit, Chlorit, Pyrophyllit, Smektit, Montmorillonit, Beidellit, Nontronit, Saponit oder Hectorit sowie deren beliebige Mischungen. Hierbei sind solche Tonminerale mit faserförmiger oder nadelförmiger Struktur besonders bevorzugt. Selbstverständlich können auch plättchenförmige Tonminerale zum Einsatz kommen, wenngleich diese weniger bevorzugt sind. Besonders geeignete Tonminerale können hierbei ausgewählt werden aus zum Beispiel Bentonen, Sepiolith und Attapulgit oder beliebigen Mischungen derselben. Besonders bevorzugt sind hierbei Sepiolith und Attapulgit.

Besonders geeignete Rheologieadditive quellen in Anwesenheit von Wasser vorzugsweise nicht. Demgemäß wird in einer zweckmäßigen Ausgestaltung auf quellfähige Polymere wie Celluloseether oder Celluloseether-Derivate verzichtet. Überraschender Weise hat sich gezeigt, dass bei Verwendung von quellfähigen Rheologieadditiven in der Regel Einbußen bei der Kapillarität der aus den erfindungsgemäßen Zubereitungsmassen erhältlichen porösen Substrate in Kauf zu nehmen sind. Demgemäß werden solche quellfähigen Rheologieadditive nicht bzw. allenfalls nur in einer Menge eingesetzt, die im Wesentlichen keinen Einfluss auf die Einstellung der Viskosität bzw. Rheologie der Zubereitungsmasse hat. Solche quellfähigen polymeren Verbindungen umfassen insbesondere Celluloseether-Derivate wie Methylcellulose, Methylethylcellulose, Methylhydroxycellulose, Ethylcellulose und Methylhydroxypropylcellulose. Allerdings stellen solche modifizierten Celluloseether bzw. Celluloseether-Derivate geeignete nicht-mineralische Rheologieadditive dar, die in Anwesenheit von Wasser nicht oder nur in geringem Umfang quellen.

In einer besonders zweckmäßigen Ausgestaltung umfassen die erfindungsgemäßen Zubereitungsmassen ferner mindestens ein Fasermaterial (Komponente e)), vorzugsweise Polyolefinfasern, wie Polypropylen- und/oder Polyethylenfasern, und/oder mineralische Fasern, insbesondere Wollastonit-Fasern. Geeignete Fasern liegen insbesondere als Schnitt- bzw. Stapelfasern vor, beispielsweise mit einer durchschnittlichen Länge im Bereich von 0,5 mm bis 5 mm, vorzugsweise mit einer Länge im Bereich von 1,0 bis 3,0 mm. Hierbei kann der durchschnittliche Durchmesser dieser Fasermaterialien in einem Bereich von 1 µm bis 100 µm, vorzugsweise im Bereich von 5 µm bis 30 µm, liegen.

Durch Verwendung von Fasern kann die Schwindminderung und Rissbildung beim Erhärten der erfindungsgemäßen Zubereitungsmassen zurückgedrängt oder gar unterbunden werden. Die eingesetzten Fasern sind insbesondere nicht quellfähige Fasern. Quellfähige Fasern können die Kapillaraktivität der aus den erfindungsgemäßen Zubereitungsmassen erhältlichen porösen Substrate herabsetzen. Auch kommen bevorzugt keine Hohlfasern, die in ihrem Inneren Wasser aufnehmen können, zum Einsatz.

In einer weiteren bevorzugten Ausführungsform liegen in der erfindungsgemäßen Zubereitungsmasse neben dem mindestens einen gemahlenen Klinker auf Calciumaluminatbasis als mineralischem Bindemittel, der mindestens einen Sulfat-Komponente, dem mindestens einen, insbesondere mineralischen, Rheologieadditiv und Wasser im Wesentlichen keine anderen Komponenten vor, insbesondere keine organischen Komponenten. Darüber hinaus sind aber auch solche erfindungsgemäßen Zubereitungsmassen geeignet, die ferner umfassen mindestens eine Gesteinskörnung mit einer durchschnittlichen Partikelgröße oberhalb von 100 µm, insbesondere oberhalb von 0,5 mm, (Komponente f)) ausgewählt aus der Gruppe bestehend aus Gesteinsmehl, Sand, Split, Kalksteinkörnung und einer beliebigen Mischung hiervon. Derartige grobe Füllstoffe setzen jedoch regelmäßig die Kapillarleitungskapazität pro Mörtelvolumen der aus den erfindungsgemäßen Zubereitungsmassen erhaltenen kapillaraktiven, porösen Substrate herab.

Ganz bevorzugt wird für die erfindungsgemäßen Zubereitungsmassen auf eine Mischung aus gemahlenem Calciumsulfoaluminatklinker und, insbesondere mikronisiertem oder gemahlenem, Anhydrit zurückgegriffen. Bevorzugt ist hierbei auch, eine Mischung aus gemahlenem Calciumsulfoaluminatklinker und Anhydrit einzusetzen, die man durch gemeinsames Mahlen von Calciumsulfoaluminatklinker und Anhydrit erhalten hat.

Solche erfindungsgemäßen Zubereitungsmassen liefern besonders gute Resultate in Bezug auf Festigkeit und Kapillarleitfähigkeit, bei denen das Verhältnis der Gewichtsanteile von Komponente a), insbesondere gemahlenem Calciumsulfoaluminatklinker und/oder gemahlenem Calciumaluminatklinkern, z.B. Tonerdeschmelzklinker, vorzugsweise gemahlenem Calciumsulfoaluminatklinker, und Sulfat-Komponente (Komponente b)), insbesondere Anhydrit, im Bereich von 16/1 bis 2/1, bevorzugt im Bereich von 8/1 bis 8/3, liegt.

Außerdem hat es sich als vorteilhaft erwiesen, für die erfindungsgemäßen Zubereitungsmassen auch auf Stoffe zu verzichten, die beim Erhärten feine Strukturen bilden. Exemplarisch sei Wasserglas genannt. Besonders zweckmäßig ist es auch, keine solchen organischen und/anorganischen Stoffe zu der erfindungsgemäßen Zubereitungsmasse zu geben, die Strukturen mit einer Größe kleiner 100 nm aufweisen, beispielsweise pyrogene Kieselsäure bzw. Silicafume. Es hat sich überraschend herausgestellt, dass, wenn diese gering dimensionierten Bestandteile in die aus der erfindungsgemäßen Zubereitungsmasse erhältlichen porösen Substrate eingebunden werden, dieses zwar die gute Wasseraufnahme mittels Kapillarleitung nicht bzw. nur geringfügig vermindert, wohl aber die Abgabe von Wasser im Wege der Kapillarleitung. Letzterer Aspekt ist bei der Feuchteregulierung von Gebäudewänden der weitaus bedeutsamere. Folglich sind mit den erfindungsgemäßen Zubereitungsmassen Beschichtungen und Baukörper zugänglich, die einen sehr wirkungsvollen Feuchtetransport sicherstellen.

Außerdem hat es sich als vorteilhaft erwiesen, für die erfindungsgemäßen Zubereitungsmassen keine Normzemente nach DIN EN 197 als mineralische Bindemittel zu verwenden. Gleichwohl können in erfindungsgemäßen Zubereitungsmassen auch Normzemente, z.B. Portlandzement, in kontrollierten, abgemagerten Mengen zugegen sein.

Besonders bevorzugte erfindungsgemäße Zubereitungsmassen zeichnen sich folglich dadurch aus, dass diese Zubereitungsmasse im Wesentlichen keine quellfähigen Rheologieadditive, insbesondere keine quellfähigen Polymere, z.B. keine Celluloseether oder keine Celluloseether-Derivate, und/oder keine pyrogene Kieselsäure und/oder kein Wasserglas und/oder keine quellfähigen Fasern und/oder keine Hohlfasern und/oder, abgesehen von den Komponenten a), b) und c), keine partikulären Stoffe mit einer Partikelgröße kleiner 100 nm und/oder keine Normzemente nach DIN EN 197 enthält.

Ganz besonders bevorzugt sind hierbei solche Zubereitungsmassen, die im Wesentlichen keine quellfähigen Rheologieadditive, insbesondere keine quellfähigen Polymere, z.B. keine Celluloseether oder keine Celluloseether-Derivate, keine pyrogene Kieselsäure, kein Wasserglas, keine quellfähigen Fasern, keine Hohlfasern und, abgesehen von den Komponenten a), b) und c), keine partikulären Stoffe mit einer Partikelgröße kleiner 100 nm sowie keine Normzemente nach DIN EN 197 enthalten.

Vorteilhafte erfindungsgemäße Zubereitungsmassen zeichnen sich auch dadurch aus, dass, bezogen auf das Gesamtgewicht an Komponenten a), b), c) und e),
der kombinierte Anteil der Komponenten a) und b) im Bereich von 80 bis 99 Gew.-%, bevorzugt im Bereich von 83 bis 98 Gew.-%,
der Anteil an Komponente c) im Bereich von 1 bis 16 Gew.-%, bevorzugt im Bereich von 1,5 bis 14 Gew.-%, und
der Anteil an Komponente e) im Bereich von 0 bis 4 Gew.-%, bevorzugt im Bereich von 0,5 bis 3 Gew.-%, liegt.

Darüber hinaus können erfindungsgemäße Zubereitungsmassen auch über Additive (Komponente g)) verfügen, beispielsweise über Pigmente, Farbstoffe, Fließmittel, Abbindungsbeschleuniger, Abbindungsverzögerer, haftungsverbessernde Zusätze, Antioxidantien, Verarbeitungshilfsmittel oder Mischungen dieser Verbindungen. Geeignete Additive können zum Beispiel auch ausgewählt werden aus der Gruppe bestehend aus Netz-und Dispergiermitteln, Entschäumern, Entlüftern, Verdickern und Verarbeitungshilfsmitteln, Zementverzögerern, Zementbeschleunigern, Zementverflüssigern und oder Mischungen hiervon. Geeignete Zementverzögerer können ausgewählt werden aus der Gruppe bestehend aus Citronensäure, Weinsäure, Äpfelsäure, Zitrate, Phosphate, Phosphonate, Phosphorsäure, Gluconsäuren, Gluconolacton, Gluconate, Tartrate und Zinkverbindungen sowie Mischungen hiervon. Geeignete Zementbeschleuniger können ausgewählt werden aus der Gruppe bestehend aus Calciumformiaten, Thiocyanaten, Lithiumsalzen, Lithiumcarbonaten, Aluminiumverbindungen, Formiaten oder deren Mischungen. Geeignete Zementverflüssiger können ausgewählt sein aus der Gruppe bestehend aus Polycarboxylaten, Sulfonaten, Polyacrylaten, Melaminharzderivaten, Ligninsulfonaten, Polynaththalen oder deren Mischungen. Netz-und Dispergiermittel umfassen zum Beispiel anionische, kationische und nicht ionische Tenside oder Mischungen hiervon. Geeignete Entschäumer umfassen zum Beispiel Mineralöle und/ Silikonöle und geeignete Verarbeitungshilfsmittel können ausgewählt werden aus zum Beispiel Schichtsilikaten und/Polyurethanen.

Die Zusammensetzung erfindungsgemäßer Zubereitungsmassen enthält in einer bevorzugten Ausführungsform 4 bis 44 Gew.-%, bevorzugt 10 bis 30 Gew.-%, an Komponente a),
1 bis 9 Gew.-%, bevorzugt 2 bis 7 Gew.-%, an Komponente b),
0,1 bis 5 Gew.-%, bevorzugt 0,5 bis 4 Gew.-%, an Komponente c),
33 bis 94,9 Gew.-%, bevorzugt 54,5 bis 86,95 Gew.-%, an Komponente d),
0 bis 1 Gew.-%, bevorzugt 0,05 bis 0,5 Gew.-%, an Komponente e),
0 bis 4 Gew.-%, bevorzugt 0 bis 2 Gew.-%, an Komponente f) und
0 bis 4 Gew.-%, bevorzugt 0,5 bis 2 Gew.-%, an Komponente g).

Die der Erfindung zu Grunde liegende Aufgabe wird des Weiteren gelöst durch kapillarleitfähige, poröse Substrate, die aus den erfindungsgemäßen Zubereitungsmassen erhalten werden. Hierbei sind solche erfindungsgemäßen Substrate bevorzugt, die mittels Auskristallisierens unter Erhalt nadeiförmiger Strukturen erhalten werden.

Es hat sich gezeigt, dass die Kapillaraktivität bzw. die Porosität dieser Substrate über die Menge an Wasser in der Zubereitungsmasse eingestellt werden kann. Hierbei sind solche Substrate bevorzugt, die über eine Trockenrohdichte nicht größer als 750 kg/m³, bevorzugt nicht größer als 550 kg/m³ und besonders bevorzugt nicht größer als 400 kg/m³, verfügen.

Gute Ergebnisse in Sachen Kapillarleitfähigkeit und Wärmedämmung erhält man insbesondere auch mit solchen erfindungsgemäßen Substraten, die über ein Porenvolumen im Bereich von 50 bis 95%, insbesondere im Bereich von 60 bis 90 %, verfügen. Der durchschnittliche Porendurchmesser besonders kapillaraktiver erfindungsgemäßer Substrate liegt im Bereich von 0,5 bis 20 µm und bevorzugt im Bereich von 1 bis 15 µm.

Die erfindungsgemäßen Substrate können zum Beispiel eingesetzt werden bzw. vorliegen als Wärmedämmplatte, insbesondere Wärmeinnendämmplatte, Gebäudewandbeschichtung, Wärmedämmplattenbeschichtung, Profil, Unterputz, Oberputz oder Oberflächenfinish, insbesondere im Innenbereich.

Derartige erfindungsgemäßen Substrate sind besonders vorteilhaft, insbesondere im Hinblick auf die Eigenschaften der Kapillarleitung und der Wärmedämmung, die überwiegend, insbesondere zu mehr als 80 Gew-%, Kristalle der AFt-Phasen enthalten. Hierbei sind Ettringit-Kristalle und Mischkristalle des Ettringits besonders bevorzugt. Beim Auskristallisieren bilden sich in der Regel in einer bevorzugten Ausgestaltung nadelförmige Strukturen aus. Diese lassen sich in REM-Aufnahmen ohne weiteres feststellen. In ganz besonders bevorzugten erfindungsgemäßen Substraten liegt bilden sich beim Auskristallisieren nadelförmige Strukturen aus mit durchschnittlichen Nadellängen im Bereich von 1 µm bis 100 µm, bevorzugt von 5 µm bis 60 µm und besonders bevorzugt von 10 µm bis 40 µm aus. Hierbei sind solche erfindungsgemäßen Substrate, die, insbesondere überwiegend oder im Wesentlichen vollständig, über nadelförmige Strukturen mit einem Aspektverhältnis (Länge zu Durchmesser) größer oder gleich 3:1, bevorzugt größer oder gleich 5:1 und besonders bevorzugt größer oder gleich 10:1, ganz besonders geeignet.

Selbstverständlich ist es möglich, die Oberfläche der erfindungsgemäßen Substrate zu behandeln, beispielsweise mit einem hydrophoben Material zu imprägnieren. Auf diese Weise wird der Feuchteaustritt aus der Substratoberfläche mittels Diffusion forciert.

Die der Erfindung zu Grunde liegende Aufgabe wird des weiteren gelöst durch ein Verfahren zur Herstellung der erfindungsgemäßen kapillarleitfahigen, porösen Substrate, umfassend die Zurverfügungstellung einer erfindungsgemäßen Zubereitungsmasse und hydraulisches Erhärten der Zubereitungsmasse. In einer besonders bevorzugten Ausgestaltung, findet das hydraulische Erhärten ohne Anwendung von Druck oberhalb Normaldrucks, Temperaturerhöhung und/oder Wasserdampf und ganz besonders bevorzugt ohne Autoklavieren statt.

Das erfindungsgemäße Verfahren sowie die nach diesem Verfahren erhältlichen Substrate zeichnen sich demgemäß dadurch aus, dass auf ein Autoklavieren zwecks Erhalts eines erhärteten Substrats aus der erfindungsgemäßen Zubereitungsmasse gezielt verzichtet werden kann. Bevorzugt erhält man das erhärtete Substrat durch hydraulisches Erhärten unter Normalbedingungen (20°C, 65% relative Feuchte).

Es hat sich überraschender Weise aus mehreren Gründen als vorteilhaft erwiesen, für die erfindungsgemäßen Zubereitungsmassen große Mengen an Wasser zu verwenden. Trotz der großen Menge an Wasser liegt die Zubereitungsmasse bei ihrer Herstellung über den Einsatz an insbesondere mineralischem Rheologieadditiv in angesteifter Form als thixotrope Masse vor. Diese relativ große Wassermenge trägt dazu bei, die Komponenten a) und b) zumindest in bestimmten Umfang in Lösung zu bringen. Es wird vermutet, dass dann aus dieser Lösung heraus eine Kristallbildung in Gegenwart von Wasser stattfindet und dass dasjenige Wasser, das während des Erhärtens der erfindungsgemäßen Zubereitungsmasse nicht chemisch gebunden wird, mit zur Kapillarbildung beiträgt. Es wurde überraschend gefunden, dass über die Menge an zugesetztem Wasser (Komponente d)) die Kapillarität der aus den erfindungsgemäßen Zubereitungsmassen erhaltenen porösen Substrate gesteuert werden kann.

Ein bevorzugtes Herstellungsverfahren zeichnet sich demgemäß dadurch aus, dass, insbesondere nach Verfahrensschritt ii), die Komponenten a) und b) für eine Zeitdauer zumindest anteilig in gelöster Form vorliegen und so miteinander reagieren können. Auf diese Weise erhält man eine besonders ausgeprägte Ettringit-Kristallbildung, womit eine besonders gute Kapillarleitfähigkeit und Porosität einhergeht. Bei der Reaktion der Komponenten a) und b) wird ein Teil des zugesetzten Wassers (Komponente d)) chemisch gebunden. Denjenigen Anteil an nicht-chemisch gebundenem Wasser lässt man, vorzugsweise unter Normalbedingungen, verdunsten. Indem die Verdunstung des nicht-chemisch gebundenen Wassers nicht forciert wird, erhält man eine sehr vorteilhafte poröse Struktur der erfindungsgemäßen Substrate, welche sich durch sehr gute Kapillarleitfähigkeit, insbesondere auch durch die zügige Abgaben von aufgenommenem Wasser über Kapillarleitung, und durch gute Wärmedämmeigenschaften auszeichnet. In REM-Aufnahmen zeigen Proben der nach dem erfindungsgemäßen Verfahren erhaltenen Substrate regelmäßig keine Körner bzw. Fremdkörper und/oder Hohlräume, um die herum ein Kristallwachstum stattgefunden hat.

In seiner besonders bevorzugten Ausgestaltung des erfindungsgemäßen Verfahrens ist vorgesehen, dass i) zunächst das mindestens eine, insbesondere mineralische, Rheologieadditiv (Komponente c)) mit Wasser (Komponente d)) unter Rühren vermengt wird und ii) die gemäß i) erhaltene Mischung mit dem mindestens einen gemahlenen Klinker auf Calciumaluminatbasis (Komponente a)) und der mindestens einen Sulfat-Komponente (Komponente b)) vermengt wird.

Interessanterweise lassen sich durch Optimierung der Mischreihenfolge der Komponenten der erfindungsgemäßen Zubereitungsmasse die Resultate nochmals verbessern. So ist es bevorzugt, wenn das mineralische Rheologieadditiv zunächst in der Komponente d) (Wasser), insbesondere mittels eines Dissolvers, aufgeschlossen wird und man erst anschließend unter Zuhilfenahme des Dissolvers die Komponenten a) und b) hinzugibt. Auf diese Weise kann die Menge an mineralischem Rheologieadditiv signifikant verringert werden, die erforderlich ist, um aus den erfindungsgemäßen Zubereitungsmassen ohne Autoklavieren zu hoch kapillarleitfähigen, porösen Substraten zu gelangen. Indem es gelingt, die Menge an mineralischem Rheologieadditiv zu verringern, ist es möglich, die Trockenrohdichte des erhaltenen porösen Substrats ebenfalls zu verringern, womit eine gesteigerte Kapillarität einhergeht. Es hat sich als besonders zweckmäßig erwiesen, wenn man die Komponenten a) und b) als Mischung in Wasser, insbesondere in das wässrige System enthaltend das mineralische Rheologieadditiv gibt. Auch hierbei setzt man bevorzugt einen Dissolver ein. Bei einem Dissolver handelt es sich üblicherweise um einen sogenannten Scheibenrührer. Es hat sich demgemäß als vorteilhaft erwiesen, den bzw. die Mischvorgänge unter starkem Rühren durchzuführen. Darüber hinaus ist es auch möglich, zunächst die Komponente a), vorzugsweise unter Rühren, in Wasser zu geben und anschließend, vorzugsweise nicht später als 10 Minuten, insbesondere nicht später als 5 Minuten, nach der Zugabe der Komponente a), die Komponente b), vorzugsweise erneut unter Rühren, zuzugeben.

Die Umfangsgeschwindigkeit des Rührwerkzeugs, insbesondere des Dissolvers, liegt in einer zweckmäßigen Ausgestaltung im Bereich von 10 bis 25 m/sec, insbesondere im Bereich von 12 bis 22 m/sec. Beispielsweise können geeignete Umfangsgeschwindigkeiten im Bereich von 15 bis 20 m/sec gewählt werden. Hierbei hat es sich als vorteilhaft herausgestellt, den vorzugweise vorgeschalteten Schritt des Einmischens des mineralischen Rheologieadditivs in Wasser bei höheren Umfangsgeschwindigkeiten, z.B. im Bereich von 18 bis 22 m/sec, vorzunehmen als das anschließende Einmischen von Komponente a) und Komponente b), beispielsweise im Bereich von 14 bis 17 m/sec.

Bei der Zugabe von Komponente a) und Komponente b) ist es von Vorteil, die Reaktionstemperatur zu kontrollieren und gegebenenfalls das Reaktionsgefäß zu temperieren und/oder die Rührgeschwindigkeit zu senken.

Nach Beendigung der Durchmischung sämtlicher Komponenten und der zumindest teilweisen Anlösung der Komponenten a) und b) wird die erhaltene Mischung zeitnah, vorzugsweise im Wesentlichen unmittelbar zu den gewünschten erfindungsgemäßen Substraten oder Beschichtungen verarbeitet. Insbesondere solange die erfindungsgemäße Zubereitungsmasse gerührt bzw. in Bewegung gehalten werden kann, z.B. mittels Transports, ist hiermit auch eine Spritzapplikation ohne weiteres möglich. Der Aushärtevorgang kann sich z.B. über einen Zeitraum von 8 bis 24 Stunden oder auch länger erstrecken.

Für die Herstellung der erfindungsgemäßen Substrate kann in einer besonders zweckmäßigen Ausgestaltung Gebrauch gemacht werden von einem Kit-of-parts, enthaltend eine Mischung aus mindestens einem gemahlenen Klinker auf Calciumaluminatbasis, umfassend oder bestehend aus gemahlenem Calciumsulfoaluminatklinker und/oder gemahlenem Calciumaluminatklinker, z.B. Tonerdeschmelzklinker, insbesondere gemahlenem Calciumsulfoaluminatklinker, (Komponente a)) und mindestens einer Sulfat-Komponente, ausgewählt aus der Gruppe bestehend aus Anhydrit (CaSO₄), Calciumsulfat-Halbhydrat (CaSO₄ • ½ H₂O), Calciumsulfat-Dihydrat (CaSO₄ • 2H₂O), Magnesiumsulfat, Alkalisulfat, insbesondere Natriumsulfat, Eisensulfat, Natriumhydrogensulfat, Calciumhydrogensulfat, Mischsulfaten der genannten Sulfate und belieben Mischungen, insbesondere Anhydrit, (Komponente b)) als ersten Bestandteil und mindestens ein, insbesondere mineralisches, Rheologieadditiv (Komponente c)) als zweiten Bestandteil.

Die der Erfindung zu Grunde liegende Aufgabe wird des weiteren gelöst durch eine kapillarleitfähige und/ oder diffusionsaktive Dämmplatte aus geschäumten Polymermaterial mit einer ersten, einer Gebäudeaußenwand zuwendbaren oder zugewandten Seite und einer gegenüberliegenden zweiten, einem Innenraum zuwendbaren oder zugewandten Seite sowie eine Putz- oder Klebebeschichtung auf der ersten Seite, erhalten aus einer erfindungsgemäßen Zubereitungsmasse.

Indem die erfindungsgemäße Zubereitungsmasse auf einer geschäumten Dämmplatte gebäudewandseitig aufgebracht wird, kann eine klebende bzw. haftende Verbindung mit der Innenseite der Gebäudeaußenwand hergestellt werden. Die nach Erhärten erhaltene Schicht ist sehr gut kapillarleitend und ermöglicht den Abtransport von Feuchtigkeit in Richtung des Innenraums über eine geschäumte Dämmplatte, die kapillarleitfähig und/oder diffusionsaktiv ausgestattet ist. Des Weiteren kann vorgesehen sein, dass auf der zweiten Seite eine Putzbeschichtung, erhalten aus einer erfindungsgemäßen Zubereitungsmasse und/oder eine diffusionsaktive, hydrophobierte Putzbeschichtung vorliegt.

Außerdem sind auch solche erfindungsgemäßen Wärmedämmmodule bevorzugt, bei denen die auf der zweiten Seite vorliegende Putzbeschichtung mit einem hydrophoben Material imprägniert ist.

Die erfindungsgemäßen Zubereitungsmassen können demgemäß als Mörtelmasse, insbesondere als Ausgleichsmörtel, oder als Kleber für die Anbringung von Wärmedämmplatten verwendet werden. Darüber hinaus kommen die erfindungsgemäßen Zubereitungsmassen für die Herstellung von Wärmedämmplatten, insbesondere von Wärmeinnendämmplatten, von Gebäudewandbeschichtungen, von Wärmedämmplattenbeschichtungen, von Unterputzen, Oberputzen oder von einem Oberflächenfinish in Betracht. Von weiterem Vorteil ist auch, dass sich über die Menge an Sulfat-Komponente b) die Verträglichkeit zu Gipsuntergründen einstellen lässt. Demgemäß können die erfindungsgemäßen Zubereitungsmassen auch ohne weiteres an Gipsuntergründe angebunden werden.

Mit der vorliegenden Erfindung geht der überraschende Effekt einher, dass die aus den ertindungsgemäßen Zubereitungsmassen erhaltenen kapillarleitfähigen, porösen Substrate über eine sehr ausgeprägte Kapillaraktivität verfügen, was zur Folge hat, dass an der Innenseite einer Gebäudeaußenwand vorliegende Feuchtigkeit oder sich angesammeltes Wasser zügig und unproblematisch in Richtung Innenraum abtransportiert werden kann. Hierbei zeichnen sich die erfindungsgemäßen kapillarleitfähigen, porösen Substrate nicht nur durch eine schnelle Aufnahme von Feuchtigkeit aus, sondern insbesondere auch dadurch, dass die aufgenommene Feuchtigkeit zügig durch das Substrat hindurch transportiert und sodann ebenfalls zügig an der gegenüberliegenden Seite wieder abgegeben wird.

Mit der erfindungsgemäßen Zubereitungsmasse lassen sich somit nach dem erfindungsgemäßen Verfahren kapillaraktive Innendämmungen erhalten, die eine sehr schnelle Trocknung des Wandaufbaus sicherstellen. Während der Trocknung einer mit Wasser beladenen Wärmedämmplatte bzw. einer Beschichtung aus kapillarleitfähigem Material geht üblicherweise die Kapillarleitung ab einer bestimmten Wassermenge pro Volumen in die Diffusion über. Mit den aus den erfindungsgemäßen Zubereitungsmassen erhältlichen porösen Substraten gelingt ein sehr lang anhaltender kapillaraktiver Flüssigkeitstransport während der Trocknungsphase des Substrats, so dass nur noch eine sehr geringe Restwassermenge pro Volumen das kapillarleitfähige Substrat über Diffusion zu verlassen hat. Je geringer diese Restwassermenge ist, umso besser kapillarleitend ist diese Substanz. Mit den erfindungsgemäßen Substraten lässt sich diese Restwassermenge regelmäßig auf sehr geringe Werte einstellen. Überraschender Weise wurde gefunden, dass sich die aus den erfindungsgemäßen Zubereitungsmassen erhältlichen kapillarleitfähigen, porösen Substrate durch eine Rohdichte wie auch durch eine Kapillaraktivität auszeichnen, wie sie üblicherweise nur mit Baukörpern aus leichtem Calciumsilikat, die mittels Autoklavierens hergestellt wurden, erhältlich sind. Das erfindungsgemäße Herstellverfahren ist wesentlich günstiger als herkömmliche Verfahren.

## Patentansprüche

1. Zubereitungsmasse für kapillarleitfähige, poröse Substrate, enthaltend oder im Wesentlichen bestehend aus
a) mindestens einem gemahlenen Klinker auf Calciumaluminatbasis, umfassend oder bestehend aus gemahlenem Calciumsulfoaluminatklinker und/oder gemahlenem Calciumaluminatklinker,
b) mindestens einer Sulfat-Komponente, ausgewählt aus der Gruppe bestehend aus Anhydrit (CaSO₄), Calciumsulfat-Halbhydrat (CaSO₄ • ½ H₂O), Calciumsulfat-Dihydrat (CaSO₄ • 2H₂O), Magnesiumsulfat, Alkalisulfat, Eisensulfat, Natriumhydrogensulfat, Calciumhydrogensulfat, Mischsulfaten der genannten Sulfate und belieben Mischungen,
c) mindestens einem mineralischen Rheologieadditiv und
d) Wasser,
wobei das Gewichtsverhältnis von Wasser (Komponente d)) zu der Summe aus gemahlenem Klinker auf Calciumaluminatbasis (Komponente a)) und Sulfat-Komponente (Komponente b)) größer oder gleich 1,0 ist.

2. Zubereitungsmasse nach Anspruch 1, **dadurch gekennzeichnet, dass** die Sulfat-Komponente Anhydrit darstellt und/oder in mikronisierter oder gemahlener Form eingesetzt wird oder vorliegt.

3. Zubereitungsmasse nach Anspruch 1 oder 2, **dadurch gekennzeichnet, dass** als mineralisches Rheologieadditiv ein faser- oder nadelförmiges Tonmineral eingesetzt wird oder vorliegt.

4. Zubereitungsmasse nach Anspruch 3, **dadurch gekennzeichnet, dass** das Tonmineral ausgewählt ist aus der Gruppe bestehend aus Bentone, Sepiolith und Attapulgit sowie beliebigen Mischungen derselben.

5. Zubereitungsmasse nach einem der vorangehenden Ansprüche, ferner umfassend mindestens ein Fasermaterial (Komponente e)), vorzugsweise Polyolefinfasern und/oder mineralische Fasern.

6. Zubereitungsmasse nach einem der vorangehenden Ansprüche, ferner umfassend mindestens eine Gesteinskörnung mit einer durchschnittlichen Partikelgröße oberhalb von 100 µm, insbesondere oberhalb von 0,5 mm, (Komponente f)) ausgewählt aus der Gruppe bestehend aus Gesteinsmehl, Sand, Split, Kalksteinkörnung und einer beliebigen Mischung hiervon.

7. Zubereitungsmasse nach einem der vorangehenden Ansprüche, **dadurch gekennzeichnet, dass**
die Komponente a) gemahlenen Calciumsulfoaluminatklinker umfasst oder hieraus besteht und dass die Sulfat-Komponente (Komponente b)) Anhydrit umfasst oder hieraus besteht.

8. Zubereitungsmasse nach einem der vorangehenden Ansprüche, **dadurch gekennzeichnet, dass**
das Verhältnis der Gewichtsanteile von Komponente a), insbesondere gemahlenem Calciumsulfoaluminatklinker, und Sulfat-Komponente (Komponente b)), insbesondere Anhydrit, im Bereich von 16/1 bis 2/1, bevorzugt im Bereich von 8/1 bis 8/3, liegt.

9. Zubereitungsmasse nach einem der vorangehenden Ansprüche, **dadurch gekennzeichnet, dass**
diese Zubereitungsmasse im Wesentlichen keine quellfähigen Rheologieadditive, insbesondere keine quellfähigen Polymere und/oder keine pyrogene Kieselsäure und/oder kein Wasserglas und/oder keine quellfähigen Fasern und/oder keine Hohlfasern und/oder, abgesehen von den Komponenten a), b) und c), keine partikulären Stoffe mit einer Partikelgröße kleiner 100 nm enthält.

10. Zubereitungsmasse nach einem der Ansprüche 5 bis 9, **dadurch gekennzeichnet, dass**, bezogen auf das Gesamtgewicht an Komponenten a), b), c) und e),
der kombinierte Anteil der Komponenten a) und b) im Bereich von 80 bis 99 Gew.-%, bevorzugt im Bereich von 83 bis 98 Gew.-%,
der Anteil an Komponente c) im Bereich von 1 bis 16 Gew.-%, bevorzugt im Bereich von 1,5 bis 14 Gew.-%, und
der Anteil an Komponente e) im Bereich von 0 bis 4 Gew.-%, bevorzugt im Bereich von 0,5 bis 3 Gew.-%,
liegt.

11. Zubereitungsmasse nach einem der vorangehenden Ansprüche, ferner umfassend mindestens ein Additiv (Komponente g)).

12. Zubereitungsmasse nach einem der vorangehenden Ansprüche, enthaltend
4 bis 44 Gew.-%, bevorzugt 10 bis 30 Gew.-%, an Komponente a),
1 bis 9 Gew.-%, bevorzugt 2 bis 7 Gew.-%, an Komponente b),
0,1 bis 5 Gew.-%, bevorzugt 0,5 bis 4 Gew.-%, an Komponente c),
33 bis 94,9 Gew.-%, bevorzugt 54,5 bis 86,95 Gew.-%, an Komponente d),
0 bis 1 Gew.-%, bevorzugt 0,05 bis 0,5 Gew.-%, an Komponente e),
0 bis 4 Gew.-%, bevorzugt 0 bis 2 Gew.-%, an Komponente f) und
0 bis 4 Gew.-%, bevorzugt 0,5 bis 2 Gew.-%, an Komponente g).

13. Kapillarleitfähige, poröse Substrate, erhalten aus einer Zubereitungsmasse gemäß mindestens einem der Ansprüche 1 bis 12, insbesondere mittels Auskristallisierens unter Erhalt nadelförmiger Strukturen.

14. Substrat nach Anspruch 13, **gekennzeichnet durch**
eine Trockenrohdichte nicht größer als 750 kg/m³, bevorzugt nicht größer als 550 kg/m³ und besonders bevorzugt nicht größer als 400 kg/m³.

15. Substrat nach Anspruch 13 oder 14, **gekennzeichnet durch**
ein Porenvolumen im Bereich von 50 bis 95 Prozent, insbesondere im Bereich von 60 bis 90 Prozent.

16. Substrat nach einem der Ansprüche 13 bis 15, **dadurch gekennzeichnet, dass** dieses eine Wärmedämmplatte, insbesondere eine Wärmeinnendämmplatte, eine Gebäudewandbeschichtung, eine Wännedämmplattenbeschichtung, ein Profil, einen Unterputz, einen Oberputz oder ein Oberflächenfinish, insbesondere für den Innenbereich, darstellt.

17. Substrat nach einem der Ansprüche 13 bis 16, **dadurch gekennzeichnet, dass** dieses überwiegend, insbesondere zu mehr als 80 Gew.-%, Kristalle der AFt-Phasen, vorzugsweise Ettringit und Mischkristalle des Ettringits, enthält.

18. Substrat nach einem der Ansprüche 13 bis 17, **dadurch gekennzeichnet, dass** die Substratoberfläche zumindest abschnittsweise mit hydrophobem Material imprägniert ist.

19. Substrat nach einem der Ansprüche 13 bis 18, **dadurch gekennzeichnet, dass** die nadelförmigen Strukturen Nadeln mit einer durchschnittlichen Nadellänge im Bereich von 1 µm bis 100 µm, bevorzugt im Bereich von 5 µm bis 60 µm und besonders bevorzugt im Bereich von 10 µm bis 40 µm aufweisen und/oder dass diese Substrate, insbesondere überwiegend oder im Wesentlichen vollständig, über nadelförmige Strukturen mit einem Aspektverhältnis (Länge zu Durchmesser) größer oder gleich 3:1, bevorzugt größer oder gleich 5:1 und besonders bevorzugt größer oder gleich 10:1, verfügen.

20. Wärmedämmmodul für die Innendämmung, umfassend eine kapillarleitfähige und/ oder diffusionsaktive Dämmplatte aus geschäumten Polymermaterial mit einer ersten, einer Gebäudeaußenwand zuwendbaren oder zugewandten Seite und einer gegenüberliegenden zweiten, einem Innenraum zuwendbaren oder zugewandten Seite sowie eine Putz- oder Klebebeschichtung auf der ersten Seite, erhalten aus einer Zubereitungsmasse nach einem der Ansprüche 1 bis 12.

21. Wärmedämmmodul nach Anspruch 20, **dadurch gekennzeichnet, dass** auf der zweiten Seite eine Putzbeschichtung, erhalten aus einer Zubereitungsmasse nach einem der Ansprüche 1 bis 12, und/oder eine diffusionsaktive, hydrophobierte Putzbeschichtung vorliegt.

22. Wärmedämmmodul nach Anspruch 20 oder 21, **dadurch gekennzeichnet, dass** die auf der zweiten Seite vorliegende Putzbeschichtung mit einem hydrophoben Material imprägniert ist.

23. Verfahren zur Herstellung kapillarleitfähiger, poröser Substrate gemäß einem der Ansprüche 13 bis 19, umfassend
Zurverfügungstellung einer Zubereitungsmasse gemäß einem der Ansprache 1 bis 12 und hydraulisches Erhärten der Zubereitungsmasse.

24. Verfahren nach Anspruch 23, **dadurch gekennzeichnet, dass** das hydraulische Erhärten nicht mittels Autoklavierens erfolgt und/oder das hydraulische Erhärten unter Normalbedingungen erfolgt und/oder dass man das nicht chemisch gebundene Wasser unter Normalbedingungen verdunsten lässt.

25. Verfahren nach Anspruch 23 oder 24 **dadurch gekennzeichnet, dass**
i) zunächst das mindestens eine mineralische Rheologieadditiv (Komponente c)) mit Wasser (Komponente d)) unter Rühren vermengt wird und
ii) die gemäß i) erhaltene Mischung mit dem mindestens einen gemahlenen Klinker auf Caleiumaluminatbasis (Komponente a)) und der mindestens einen Sulfat-Komponente (Komponente b)) vermengt wird.

26. Verwendung der Zubereitungsmasse nach einem der Ansprüche 1 bis 12 als Mörtelmasse, insbesondere als Ausgleichsmörtel, oder als Kleber für die Anbringung von Dämmplatten oder für die Herstellung von Wärmedämmplatten, insbesondere von Wärmeinnendämmplatten, Gebäudewandbeschichtungen, Wärmedämmplattenbeschichtungen, Unterputzen, Oberputzen oder eines Oberflächenfinish, insbesondere für den Innenbereich.

## Claims

1. A preparation mass for porous substrates capable of capillary conduction, containing or substantially consisting of
a) at least one ground calcium aluminate-based clinker, comprising or consisting of ground calcium sulfoaluminate clinker and/or ground calcium aluminate clinker,
b) at least one sulfate component, selected from the group consisting of anhydrite (CaSO₄), calcium sulfate hemihydrate (CaSO₄·½H₂O), calcium sulfate dihydrate (CaSO₄·2H₂O), magnesium sulfate, alkali sulfate, iron sulfate, sodium hydrogen sulfate, calcium hydrogen sulfate, mixed sulfates of said sulfates and any desired mixtures,
c) at least one mineral rheological additive, and
d) water,
wherein the weight ratio of water (component d)) to the sum of ground calcium aluminate-based clinker (component a)) and the sulfate component (component b)) is greater than or equal to 1.0.

2. The preparation mass according to Claim 1, **characterized in that** the sulfate component is anhydrite and/or is used or present in micronized or ground form.

3. The preparation mass according to Claim 1 or 2, **characterized in that** a fiber-shaped or needle-shaped clay mineral is used or is present as the mineral rheological additive.

4. The preparation mass according to Claim 3, **characterized in that** the clay mineral is selected from the group consisting of bentone, sepiolite and attapulgite and any desired mixtures thereof.

5. The preparation mass according to any of the preceding Claims, further comprising at least one fiber material (component e)), preferably polyolefin fibers and/or mineral fibers.

6. The preparation mass according to any of the preceding Claims, further comprising at least one mineral aggregate having an average particle size of more than 100 µm, in particular more than 0.5 mm, (component f)) selected from the group consisting of powdered mineral, sand, gravel, limestone aggregate and any desired mixture thereof.

7. The preparation mass according to any of the preceding Claims, **characterized in that** component a) comprises or consists of ground calcium sulfoaluminate clinker, and **in that** the sulfate component (component b)) comprises or consists of anhydrite.

8. The preparation mass according to any of the preceding Claims, **characterized in that** the ratio of the weight proportions of component a), in particular ground calcium sulfoaluminate clinker, and the sulfate component (component b)), in particular anhydrite, is in the range of 16/1 to 2/1, preferably in the range of 8/1 to 8/3.

9. The preparation mass according to any of the preceding Claims, **characterized in that** said preparation mass contains substantially no swellable rheological additives, in particular no swellable polymers and/or no pyrogenic silica and/or no water glass and/or no swellable fibers and/or no hollow fibers and/or, apart from components a), b) and c), no particulate substances having a particle size of less than 100 nm.

10. The preparation mass according to any of Claims 5 to 9, **characterized in that**,
based on the total weight of components a), b), c) and e),
the combined proportion of components a) and b) is in the range of 80 to 99 wt.%, preferably in the range of 83 to 98 wt.%,
the proportion of component c) is in the range of 1 to 16 wt.%, preferably in the range of 1.5 to 14 wt.%, and
the proportion of component e) is in the range of 0 to 4 wt.%, preferably in the range of 0.5 to 3 wt.%.

11. The preparation mass according to any of the preceding Claims, further comprising at least one additive (component g)).

12. The preparation mass according to any of the preceding Claims, containing
4 to 44 wt.%, preferably 10 to 30 wt.%, of component a),
1 to 9 wt.%, preferably 2 to 7 wt.%, of component b),
0.1 to 5 wt.%, preferably 0.5 to 4 wt.%, of component c),
33 to 94.9 wt.%, preferably 54.5 to 86.95 wt.%, of component d),
0 to 1 wt.%, preferably 0.05 to 0.5 wt.%, of component e),
0 to 4 wt.%, preferably 0 to 2 wt.%, of component f), and
0 to 4 wt.%, preferably 0.5 to 2 wt.%, of component g).

13. Porous substrates capable of capillary conduction, obtained from a preparation mass according to at least one of Claims 1 to 12, in particular by means of crystallization to obtain needle-shaped structures.

14. The substrate according to Claim 13, **characterized by** a dry bulk density of no more than 750 kg/m³, preferably no more than 550 kg/m³, and particularly preferably no more than 400 kg/m³.

15. The substrate according to Claim 13 or 14, **characterized by** a pore volume in the range of 50 to 95 percent, in particular in the range of 60 to 90 percent.

16. The substrate according to any of Claims 13 to 15, **characterized in that** said substrate is a thermal insulation board, in particular an internal thermal insulation board, a building wall coating, a thermal insulation board coating, a profile, a rendering coat, a setting coat or a surface finish, in particular for indoors.

17. The substrate according to any of Claims 13 to 16, **characterized in that** said substrate contains predominantly, in particular in a proportion of more than 80 wt.%, crystals of the AFt phases, preferably ettringite and mixed crystals of ettringite.

18. The substrate according to any of Claims 13 to 17, **characterized in that** the substrate surface is impregnated, at least in portions, with hydrophobic material.

19. The substrate according to any of Claims 13 to 18, **characterized in that** the needle-shaped structures include needles having an average needle length in the range of 1 µm to 100 µm, preferably in the range of 5 µm to 60 µm, and particularly preferably in the range of 10 µm to 40 µm, and/or **in that** said substrates have, in particular predominantly or substantially completely, needle-shaped structures having an aspect ratio (length to diameter) of greater than or equal to 3:1, preferably greater than or equal to 5:1, and particularly preferably greater than or equal to 10:1.

20. A thermal insulation module for internal insulation, comprising an insulation board that is capable of capillary conduction and/or is diffusion-active, is made of foamed polymer material, and has a first side that can be turned towards or faces a building external wall, and an opposite second side that can be turned towards or faces an internal space, and comprising a plaster or adhesive coating on the first side, obtained from a preparation mass according to any of Claims 1 to 12.

21. The thermal insulation module according to Claim 20, **characterized in that** a plaster coating, obtained from a preparation mass according to any of Claims 1 to 12, and/or a diffusion-active, hydrophobized plaster coating is/are present on the second side.

22. The thermal insulation module according to Claim 20 or 21, **characterized in that** the plaster coating present on the second side is impregnated with a hydrophobic material.

23. A method for manufacturing porous substrates capable of capillary conduction according to any of Claims 13 to 19, comprising
providing a preparation mass according to any of Claims 1 to 12 and hydraulically hardening of the preparation mass.

24. The method according to Claim 23, **characterized in that** the hydraulic hardening does not take place by means of autoclaving, and/or the hydraulic hardening takes place under standard conditions, and/or **in that** the water that is not chemically bound is evaporated under standard conditions.

25. The method according to Claim 23 or 24, **characterized in that**
i) the at least one mineral rheological additive (component c)) is first mixed with water (component d)) while stirring, and
ii) the mixture obtained according to i) is mixed with the at least one ground calcium aluminate-based clinker (component a)) and the at least one sulfate component (component b)).

26. The use of the preparation mass according to any of Claims 1 to 12 as a mortar mass, in particular as a leveling mortar, or as an adhesive for attaching insulation boards or for manufacturing thermal insulation boards, in particular internal thermal insulation boards, building wall coatings, thermal insulation board coatings, rendering coats, setting coats or a surface finish, in particular for indoors.

## Revendications

1. Masse de préparation pour substrats poreux conducteurs par capillarité, contenant ou consistant sensiblement en
a) au moins un clinker moulu à base d'aluminate de calcium, comprenant ou consistant en un clinker moulu de sulfoaluminate de calcium et/ou un clinker moulu d'aluminate de calcium,
b) au moins un composant sulfaté, sélectionné à partir du groupe constitué d'anhydrite (CaSO₄), d'hémihydrate de sulfate de calcium (CaSO₄ · ½H₂O), de dihydrate de sulfate de calcium (CaSO₄ · 2H₂O), de sulfate de magnésium, de sulfate alcalin, de sulfate de fer, d'hydrogénosulfate de sodium, d'hydrogénosulfate de calcium, d'un mélange des sulfates cités et de n'importe quels mélanges,
c) au moins un additif rhéologique minéral et
d) de l'eau,
dans laquelle le rapport pondéral de l'eau (composant d)) sur la somme obtenue à partir du clinker moulu à base d'aluminate de calcium (composant a)) et du composant sulfaté (composant b)) est supérieur ou égal à 1,0.

2. Masse de préparation selon la revendication 1, **caractérisée en ce que** le composant sulfaté constitue de l'anhydrite et/ou est employé ou est présente sous une forme moulue ou micronisée.

3. Masse de préparation selon la revendication 1 ou 2, **caractérisée en ce qu'**un minéral argileux aciculaire ou fibreux est employé ou est présente comme additif rhéologique minéral.

4. Masse de préparation selon la revendication 3, **caractérisée en ce que** le minéral argileux est sélectionné parmi le groupe se composant de bentone, de sépiolite et d'attapulgite ainsi que des mélanges quelconques de ces mêmes constituants.

5. Masse de préparation selon l'une quelconque des revendications précédentes, comprenant en outre au moins un matériau fibreux (composant e)), de préférence des fibres de polyoléfine et/ou des fibres minérales.

6. Masse de préparation selon l'une quelconque des revendications précédentes, comprenant en outre au moins un granulat d'une taille particulaire moyenne, supérieure à 100 µm, notamment supérieure à 0,5 mm, (composant f)), sélectionné parmi le groupe se composant de poudre de roche, de sable, de gravillons, de granulats calcaires et d'un quelconque mélange de ceux-ci.

7. Masse de préparation selon l'une quelconque des revendications précédentes, **caractérisée en ce que** le composant a) comprend du clinker moulu de sulfoaluminate de calcium ou en est constitué et que le composant sulfaté (composant b)) comprend de l'anhydrite ou en est constitué.

8. Masse de préparation selon l'une quelconque des revendications précédentes, **caractérisée en ce que** le rapport des fractions pondérales du composant a), notamment du clinker moulu de sulfoaluminate de calcium, et du composant sulfaté (composant b)), notamment de l'anhydrite, se trouve dans la plage de 16/1 à 2/1, de préférence dans la plage de 8/1 à 8/3.

9. Masse de préparation selon l'une quelconque des revendications précédentes, **caractérisée en ce que** cette masse de préparation ne contient sensiblement aucun additif rhéologique gonflable, notamment aucun polymère gonflable et/ou aucun silice pyrogéné et/ou aucun silicate alcalin et/ou aucune fibre gonflable et/ou aucune fibre creuse et/ou, abstraction faite des composants a), b) et c), aucune matière particulaire ayant une granulométrie inférieure à 100 nm.

10. Masse de préparation selon l'une des revendications 5 à 9, **caractérisée en ce que**, rapportée au poids total des composants a), b), c) et e),
la part combinée des composants a) et b) se trouve dans la plage de 80 à 99 % en poids,
de préférence dans la plage de 83 à 98 % en poids,
la part du composant c) se trouve dans la plage de 1 à 16 % en poids, de préférence dans la plage de 1,5 à 14 % en poids et
la part du composant e) se trouve dans la plage de 0 à 4 % en poids, de préférence dans la plage de 0,5 à 3 % en poids.

11. Masse de préparation selon l'une quelconque des revendications précédentes, comprenant en outre au moins un additif (composant g)).

12. Masse de préparation selon l'une quelconque des revendications précédentes, contenant
de 4 à 44 % en poids, de préférence de 10 à 30 % en poids de composant a),
de 1 à 9 % en poids, de préférence de 2 à 7 % en poids de composant b),
de 0,1 à 5 % en poids, de préférence de 0,5 à 4 % en poids de composant c),
de 33 à 94,9 % en poids, de préférence de 54,5 à 86,95 % en poids de composant d),
de 0 à 1 % en poids, de préférence de 0,05 à 0,5 % en poids de composant e),
de 0 à 4 % en poids, de préférence de 0 à 2 % en poids de composant f) et
de 0 à 4 % en poids, de préférence de 0,5 à 2 % en poids de composant g).

13. Substrats poreux conducteurs par capillarité, obtenus à partir d'une masse de préparation selon au moins une des revendications 1 à 12, notamment par une cristallisation préservant les structures aciculaires.

14. Substrat selon la revendication 13, **caractérisé par**
une masse volumique à sec qui n'est pas supérieure à 750 kg/m³, de préférence pas supérieure à 550 kg/m³ et en particulier de préférence pas supérieure à 400 kg/m³.

15. Substrat selon la revendication 13 ou 14, **caractérisé par**
un volume de pores dans la plage de 50 à 95 pour cent, notamment dans la plage de 60 à 90 pour cent.

16. Substrat selon l'une des revendications 13 à 15, **caractérisé en ce que** celui-ci constitue un panneau d'isolation thermique, notamment un panneau d'isolation thermique intérieure, un revêtement mural de bâtiment, un revêtement de panneaux d'isolation thermique, un profilé, un crépissage, un enduit de finition ou une finition de surface, destiné en particulier à l'espace intérieur.

17. Substrat selon l'une des revendications 13 à 16, **caractérisé en ce que** celui-ci contient surtout, notamment des cristaux des phases AFt à raison de plus de 80 % en poids, de préférence de l'ettringite et des cristaux mixtes d'ettringite.

18. Substrat selon l'une des revendications 13 à 17, **caractérisé en ce que** la surface de substrat est imprégnée au moins par endroits d'un matériau hydrophobe.

19. Substrat selon l'une des revendications 13 à 18, **caractérisé en ce que** les structures aciculaires présentent des aiguilles d'une longueur moyenne dans la plage de 1 µm à 100 µm, de préférence dans la plage de 5 µm à 60 µm et en particulier de préférence dans la plage de 10 µm à 40 µm et/ou que ces substrats disposent, en particulier principalement ou sensiblement en totalité, de structures aciculaires d'un rapport d'aspect (longueur sur diamètre) supérieur ou égal à 3:1, de préférence supérieur ou égal à 5:1 et en particulier de préférence supérieur ou égal à 10:1.

20. Module d'isolation thermique destiné à l'isolation intérieure, comprenant un panneau isolant à diffusion active et/ou conducteur par capillarité à base d'un matériau polymère expansé avec une première face orientable ou tournée vers une paroi extérieure de bâtiment et une seconde face opposée, orientable ou tournée vers un espace intérieur ainsi qu'un revêtement enduit ou adhésif sur la première face, obtenu à partir d'une masse de préparation selon l'une des revendications 1 à 12.

21. Module d'isolation thermique selon la revendication 20, **caractérisé en ce qu'**un revêtement enduit, obtenu à partir d'une masse de préparation selon l'une des revendications 1 à 12, et/ou un revêtement enduit rendu hydrophobe à diffusion active est présente sur la seconde face.

22. Module d'isolation thermique selon la revendication 20 ou 21, **caractérisé en ce que** le revêtement enduit présentant sur la seconde face est imprégné d'un matériau hydrophobe.

23. Procédé de fabrication de substrats poreux conducteurs par capillarité selon l'une des revendications 13 à 19, comprenant
la mise à disposition d'une masse de préparation selon l'une des revendications 1 à 12 et le durcissement hydraulique de la masse de préparation.

24. Procédé selon la revendication 23, **caractérisé en ce que** le durcissement hydraulique n'est pas réalisé par autoclavage et/ou que le durcissement hydraulique se déroule dans des conditions normales et/ou que l'on fait s'évaporer l'eau non liée chimiquement dans des conditions normales.

25. Procédé selon la revendication 23 ou 24 **caractérisé en ce que**
i) d'abord ledit additif rhéologique minéral (composant c)) au moins est mélangé par brassage à de l'eau (composant d)) et
ii) le mélange obtenu conformément à l'étape i) est amalgamé audit clinker moulu à base d'aluminate de calcium (composant a)) au moins et audit composant sulfaté (composant b)) au moins.

26. Utilisation de la masse de préparation selon l'une des revendications 1 à 12 comme masse de mortier, notamment comme mortier d'égalisation, ou comme colle pour poser des panneaux isolants ou pour fabriquer des panneaux d'isolation thermique, notamment des panneaux d'isolation thermique intérieure, des revêtements muraux de bâtiment, des revêtements de panneaux d'isolation thermique, des crépissages, des enduits de finition ou une finition de surface, destinés en particulier à l'espace intérieur.
